# EUROPEAN PATENT SPECIFICATION

(11) **EP 0 495 560 B1**
(45) Date of publication and mention of the grant of the patent: **15.05.1996**
(21) Application number: 92201010.3
(22) Date of filing: 08.11.1985
(51) Int. Cl.: B05D 1/36, B05D 7/14

(54) **Protecting substrates**
Schützen von Gegenständen
Protection de substrat

(30) Priority: 09.11.1984 US 670245; 15.02.1985 US 702116
(43) Date of publication of application: 22.07.1992
(62) Divisional of application: 85308150.3
(73) Proprietor: RAYCHEM CORPORATION, Menlo Park California 94025 (US)
(72) Inventor: Pieslak, George, Menlo Park, California 94025 (US); John, Robin, B-1900 Overijse, Kessel-lo (BE); Alvernaz, Tony G., Modesto, CA 95356 (US); Rinde, James Arthur, Fremont, California 94539 (US); van Zele, Eric, B-1338 Lasne (BE)
(74) Representative: Auckland Cooke, Jacqueline

(56) References cited:
- EP-A- 0 065 838

## Description

The invention relates to a method for applying a protective coating to a substrate, in particular a metallic pipe and polymeric substrate.

To protect substrates such as metallic pipes and pipelines from, for example, corrosion or mechanical abuse, a protective coating may be applied.

Various coatings for such substrates are known and many are commercially available. One class of coatings that has been found to be effective include the so-called fusion bonded epoxy coatings. These coatings are applied to the substrate in powdered form and are then heated to relatively high temperatures, about 200-300°C, to cause the powder particles to fuse and flow together and cure to form a continuous coating bonded to the substrate. Typically, the substrate is preheated to these high temperatures before the powdered resin is applied. For good adhesion between the epoxy coating and the pipe, it is generally required that the surface of the pipe be adequately cleaned and abraded. The fusion bonded coating may be further protected by application of one or more additional layers. Coating systems of this type are disclosed in U.S. Patent Nos. 4,213,486 to Samour and 4,510,007 to Stucke. A modification of this coating approach is disclosed in U.S. Patent No. RE30,006 to Sakayori et al in which a modified polyolefin is applied to an uncured epoxy resin coated on a metal surface and then the system is heated to melt bond the uncured epoxy resin and the polyolefin and to cure the epoxy resin. The temperature utilized must be above the melting point of the polyolefin, generally between 80 and 350°C.

Another coating technique is disclosed in US Patent No. 3,231,443 to McNulty in which a cured resin layer (e.g. epoxy) carried on a film backing is applied over an uncured resin layer (e.g. epoxy) coated on the substrate to be protected. The cured and uncured resins interact to form a protective coating. It is said that the coating can be applied in the field. Cured epoxy resins are generally brittle and thus precoring the resin as suggested in McNulty is likely to be difficult under actual pipe installation conditions, particularly if the pipe is of relatively small diameter.

Yet another approach to coating metal substrates is described in US Patent No. 3,502,492 to Spiller. In this approach a thin layer of powdered epoxy resin is coated on the metal surface and then a thick layer of plasticized polyvinyl chloride particles is applied. The coating is heated causing both the epoxy powder and the polyvinyl chloride powder to adhere to each other and to the underlying substrate. A continuous epoxy-polyvinyl chloride interface is not formed.

EP-A-0065838 describes a process for adhering a polyurethane elastomer to metal using a polyepoxy/polyamine compound and an isocyanate/high polymer compound. Both compounds are applied in a solvent, and the solvent dried in each case prior to applying the subsequent layer.

DE-A-1965802 describes a factory method of applying a protective covering to a pipe by a continuous extrusion process. The process involves preheating the pipe to high temperatures of about 140-200°C, spraying epoxy onto the hot pipe, then applying a helically wrapped tape of ethylene copolymer and polyethylene over the epoxy.

GB-A-1427260 describes a method of sheathing an article comprising covering the article with an epoxy resin hardener, heating the article to 70-90°C and continuously applying a thermoplastics material and an ethylene copolymer as respective inner and outer layers.

In general the above techniques because of the high temperatures and complex equipment required are limited to factory application of the coating or are otherwise impractical under actual field conditions. Application of pipeline coatings in the field, or protection of other substrates such as cable splices, requires techniques that employ more moderate temperatures and portable equipment. One successful technique for coating pipelines in the field is the use of a heat-recoverable (i.e. heat shrinkable) polymeric article, such as a tube, sheet or tape, in combination with a heat activatable sealant. In installing such coatings, a torch or other heat source is generally used to heat the article to cause it to recover. This heat also raises the temperature of the heat activatable sealant to above its activation temperature so that a strong bond is formed between the polymeric article and the substrate. Suitable sealants include hot melt adhesives and mastics. There are certain applications in which the substrate nay act as a heat sink and prevent the interface between the adhesive and the pipe from attaining the minimum bond line temperature required to form a strong bond between the adhesive and the pipe. One such situation is an oil-carrying pipeline in which the oil is between 25-50°C. Under these conditions it is difficult to retrofit or repair a pipeline coating with a heat recoverable article such as described above.

Another document which describes the application of a heat shrinkable sleeve onto a pipeline is US-A-3226807. This describes a method of covering a pipe with a shrinkable PVC sleeve. The method involves positioning a primer such as asphalt, or an epoxy on the pipe and using heat from the pipe to shrink the sleeve.

We have now discovered a coating method which overcomes the deficiencies of these prior techniques. The methods of this invention do not require the high temperature and complex equipment requirements of fusion bonded epoxies and can be used to retrofit or repair existing pipelines carrying oil at temperatures below the activation temperature of typical heat activatable sealants. The method is versatile and can be used in a factory, at a field plant or "over the ditch" to apply protective coatings to various substrates in particular metallic pipelines. The method can be used to protect a variety of substrates including cables, cable splices, conduits, and the like.

It has further surprisingly been found that not only is the method versatile and suitable for field or factory use, but the resulting coating on the pipe is superior to similar coatings applied by different techniques.

One aspect of this invention comprises a method of applying a protective covering to a substrate which comprises:
a) applying to the substrate a curable polymeric composition which is liquid at 20°C, is curable to a substantial extent within 24 hours at a temperature of not sore than about 80°C and comprises:
   i) a resin component which is liquid at 20°C; and
   ii) a combination of curing agents at least one of which is a Bronsted base, present in an amount sufficient to render the composition basic when it has been cured;
b) applying one or more polymeric layers, the innermost layer not being a hot melt adhesive and being capable of interacting with the said curable composition, in a manner such that said innermost layer is in intimate contact with said curable composition; and
c) allowing the curable composition to cure while maintaining said innermost layer in intimate contact with said curable composition.

Substrates which can be protected by the method of the invention are preferably elongate substrates. The substrates are are preferably cylindrical and even sore preferably hollow cylinders, such as pipes or tubing and especially pipes or tubing for carrying oil or gas. The substrate may be of any desired composition but it is preferred that the substrate be metallic or polymeric. Metallic substrates such as pipelines normally comprise iron, steel or steel alloys but nay comprise any metal. Polymeric substrates can be polymeric tubing or pipes or polymeric coatings on other substrates. For example, the method of the invention can be used to repair a polymeric coating on a steel pipe or an exposed joint area between two coated pipes. The method of the invention can be used to protect the polymeric coating as well as any exposed metallic substrate.

In accordance with this invention, the substrate is first coated with a curable polymeric composition. The curable polymeric composition is a liquid at about 24 hours at a temperature of not more than about 80°C. By "curable to a substantial extent" is meant that the composition has cured to at least about 50%, preferably at least about 65%, most preferably at least about 80%, of its fully cured state. The time to substantially cure varies greatly dependent on the particular composition, actual conditions of application, temperature, etc. For many applications it is desirable to use a curable composition which substantially cures in less than about 12 hours, preferably less than about 6 hours. For coating metallic pipes, it is generally preferred to use a curable composition which substantially cures in about 2 to 30 minutes at 80°C or less.

The curable polymeric composition comprises a resin component, and a combination of curing agents, at least one of which is a Bronsted base. The resin component is preferably a liquid at 20°C. The curing agents also are preferably a liquid at 20°C. A solvent nay be present in the curable composition but preferred curable compositions contain little or no solvent. In general, no more than about 20% by weight of the composition should comprise solvent, preferably no more than about 5% and most preferably the composition is solvent-free.

The resin component of the curable composition preferably comprises a thermosetting resin, for example a liquid epoxy resin, such as bisphenol A epoxies, novolak epoxies, 1,2-epoxies, or coal tar epoxies, prepolymer precursers of polyurethanes and/or coal tar urethanes, polyesters (unsaturated and alkyl), acrylates, polyimides, silicones, etc.

The curable polymeric composition also comprises a curing agent for the resin component. The curing agent is selected such that under the conditions of application the resin selected will be cured to a substantial extent within the desired time period. In preferred embodiments, the resin component comprises an epoxy resin and the curing agents nay be catalytic curing agents, reactive curing agents, or mixtures thereof. Examples of catalytic curing agents are anionic catalysts such as metal alkoxides, isocyanurates or more preferably materials containing free amine groups. Preferred catalytic curing agents are tertiary amines, for example, pyridine, 2,4,6-tris (dimethylaminomethyl) phenol, dimethylaminopropylamine, benzyldimethyl amine, triethyl amine or 1-methyl iridazole; or secondary amines, for example, piperidine, diethanol amine or imidazole. Examples of reactive curing agents include polyamides (for example, Versamid Polyamides from Henkel), polyamines, for example, ethylene diamine, ethylene triamine, diethylene, triamine, or thiethylene tetramine, and adducts of the above polyamides and polyamines or similar amines, for example the adduct of polyamide with a bisphenol A epoxy resins. Other catalysts useful in combination with reactive curing agents include phenolic compositions such as phenol, bisphenol A, catechol, resorsinol and other compounds containing hydroxy groups.

The curing agents or combination of curing agents used comprise at least one substance capable of accepting a proton (i.e. a hydrogen ion). It has been found that surprisingly strong bonds and resistance to cathodic disbonding are achieved when the curable polymeric composition results in a cured composition which is basic. To ensure basicity of the cured composition, excess Bronsted base, that is an amount in excess of that required to effect curing of the composition is preferably used. Generally, the Bronsted base is added in an amount of at least 0.01 moles in excess of that necessary to effect cure of the composition. Preferably, the Bronsted base is added in an amount of 0.01 to about 2 moles in excess. In a preferred embodiment the Bronsted base is a reactive curing agent and is used in an amount greater than a 1:1 ratio of basic curing agent to reactive resin, and preferably between a ratio of about 1:1 to about 3:1.

When providing the excess base it is important that the cured polymeric composition have the appropriate hardness and resistance to cathodic disbonding, either or both of which can be adversely affected if too much Bronsted based is added. By adding excess base to the curable composition the Tg of the resulting cured polymeric composition is lowered. In general, it is preferred that the cured composition have a Tg of at least about 50°C, and preferably between about 50 to about 120°C to provide the necessary properties.

The curable polymeric composition may contain an additive for improving the adhesion of the curable polymeric composition to the substrate such as coupling agents or adhesion promotors. Such additives can be in the resin, the curing agent or added separately and include, for example, silanes, p-quinone oximes, dioximes and metal deactivators.

These additives preferably are included in an amount of from about 0.1% to about 10% by weight, based on the weight of the curable polymeric composition.

Preferred curable compositions contain a silane as an adhesion promoting additive. Silanes are compounds similar to hydrocarbons in which at least one tetravalent Si replaces a C atom. A wide variety of silanes are known and many commercially produced silanes are available. See, for example, US Patent No 3,490,934, incorporated herein by reference. Other representative examples of silanes include gamma-glycidoxy-propyl-trimethoxy silane, gamma-amino propyltrimethoxy silane, aminopropyltriethoxysilane, 3-(2-aminoethyl) (aminopropyl) trimethoxy-silane, glycidoxy propyl-trimethoxysilane, vinyltriacetoxy silane, vinyltris (methoxyethoxy)-silane, beta-(3,4 epoxy cyclohexyl)ethyl trimethoxy silane, and N-vinylbenzyl-N-2(trimethoxysilyl propylamino) ethyl ammonium choride.

Examples of p-quinone oximes are dioximes and metal diactivaters are disclosed in US Patent nos. 4,455,204, 4,287,034, 3,658,755, 3,799,908, incorporated herein by reference.

The components of the curable polymeric composition (i.e. resin, curing agents, including a Bronted base, and any additives) are mixed prior to application. The curable polymeric composition is applied to the area of the substrate to be protected at a temperature (T₁) which is from about ambient temperature (i.e. about 20°C) to not more than about 80°C, preferably not more than about 60°C. It is preferred to preheat the substrate to about T₁ before applying the curable composition. The substrate may be pre-heated by any convenient technique. Where the substrate is a pipeline carrying oil or other fluid at temperatures of about T₁, a separate preheated step is not necessary. Preheating of the substrate may also be achieved during cleaning thereof, for example, shotblasting of metallic pipes heats the pipe up to about 50°C. Welding of metal pipes, for example when welding together pipe ends, may also heat the pipe to the desired temperature. Direct heating of the substrate, for example, with a torch or other flame may be desired if the substrate is not otherwise preheated.

The curable polymeric composition may be applied by any method for applying liquid coating compositions, for example, brushing, wiping, dipping or spraying. The curable polymeric composition may be applied in one or more coats if desired. Subsequent coats may be applied directly to the previous coat or applied to the surface of the polymeric layer which is to come into intimate contact therewith.

The curable composition is preferably applied in an amount to provide a coating between about 2 to about 10 mils thick, preferably about 3 to about 7 mils.

The curable polymeric composition is covered by one or more polymeric layers before it is permitted to cure to a substantial extent, that is while it is substantially uncured. The polymeric layer or layers may be applied by any convenient technique, for example, extrusion, spraying, wrapping, shrinking, pressing, painting, dipping, electrostatic depositing, etc.

The innermost polymeric layer, that is the layer placed in direct contact with the curable composition, is capable of interacting with the curable composition. This layer is maintained in intimate contact with the curable composition while it is uncured. The terms "interact" or "interacting" are used herein to mean that the innermost layer and the curable composition form an integral unit, i.e. cannot be readily separated, when the curable composition is cured in intimate contact with the innermost layer. The interaction can be physical or chemical. Physical interaction can be, for example, penetration of the curable composition into the material of the innermost polymeric layer where it becomes entrapped on curing thereof. Penetration of the curable composition by absorption or adsorption into the polymeric layer may be enhanced, if desired, by incorporating into the polymeric layer an appropriate filler. Fillers that can be used include pigments, agents such as carbon black, alumina trihydrate, clay, mineral fiber, silica, calcium silicate, barium sulfate, zinc sulfate, titanium dioxide, zinc sulfide, lithopone, ferric oxide, coated or functionalized fillers such as functionalized aluminum silicates such as mecaptans, amine or vinyl, or silanes, organic titinates, etc.

Another example of physical interaction comprises the use of a polar curable composition, e.g. an epoxy-based curable composition, together with a polar innermost polymeric layer so that a polar interaction occurs at the intimate interface between the two materials.

Chemical interaction comprises the formation of chemical bonds between the curable composition and the innermost polymeric layer. For example, the use of an innermost polymeric layer containing reactive amine groups either in the polymer structure or as an additive, over a curable epoxy resin layer will result in formation of bonds between the curable composition and the polymeric layer.

Where the curable polymeric composition is covered by only one polymeric layer, i.e. a single polymeric layer, it is preferred that the layer be applied as a preformed shaped article, such as a tape, sheet, patch or tube. Since this is the only layer applied, it will be placed in intimate contact with the curable composition. Thus, it is in essence the innermost layer and should be capable of interacting with the curable composition, as discussed above. The polymeric article can be dimensionally recoverable, and is preferably heat recoverable. The article is placed around the substrate, e.g. by wrapping, and heat is applied to cause the article to recover, that is, shrink, into contact with the curable composition on the substrate. The curable composition is then permitted to cure. It is desirable that the curing step be conducted at a temperature at which the polymeric article does not melt or flow.

The single polymeric layer preferably comprises a polyolefin such as polyethylene or polypropylene; acrylic rubber; EPDM, nitrile rubber; nylon; epichlorohydrin elastomer; polysulphide; acrylic elastomer; butyl rubber or the like. Particularly preferred is crosslinked polyethylene.

In embodiments in which more than one layer is applied over the curable composition, the innermost layer is selected so that it is capable of interaction with the curable composition. Preferably the innermost layer comprises an uncured material.

The outermost polymeric layer is preferably a preformed shaped article. A preferred method of applying more than one polymeric layer over the curable composition is to use a polymeric article coated on one surface thereof with the material to be placed in contact with the curable material, e.g. a heat activatable sealant. In a particularly preferred embodiment, a heat recoverable polymeric article coated on the surface thereof with a heat activatable adhesive, as described above, is used to apply a double layer polymeric covering over the curable polymeric material. Heat is applied, preferably from an external heat source, to cause the article to recover, i.e. shrink, so that the heat activatable adhesive comes into contact with the curable composition. The curable composition is permitted to cure at a temperature at which the polymeric article, i.e. the outermost polymeric layer, does not melt or flow. The outermost polymeric layer preferably comprises a polyolefin such as polyethylene or polypropylene; acrylic rubber; EPDM; nitrile rubber; epichlorohydrin elastomer; polysulphide; acrylic elastomer; butyl rubber or the like.

Each of the polymeric layers and the curable polymeric composition either independently or together may also contain appropriate other additives such as tackifiers, fillers, corrosion inhibitors, waves, uncured epoxy resins, rubbers, stabilizers, adhesion promotors, e.g. for improving cathodic disbonding properties, and the like.

The following example illustrates the invention. The composition was tested for resistance to cathodic disbondment by using it to bond a heat shrinkable sleeve of polyethylene to a steel pipe. The polyethylene coated pipe was then tested by the method of ASTM G-42 method A to determine the resistance of the bonding to cathodic disbondment.

### Example 1

A two comoonent epoxy bisphenol A system which is amine rich was mixed and applied with a brush to clean, shotblasted steel pipe which is at a temperature of between ambient and about 175°C. A single layer of a crosslinked blend of HDPE, EMA, EPDM and about 20% carbon black was applied as a sheet to the epoxy and the epoxy allowed to cure. Pipe and coating were allowed to rest for 24 hours before samples were tested. Samples prepared in such a manner were tested for cathodic disbonding resistance at 75°C (ASTM G-42). The cathodic disbonding radius in 30 days at 95°C was between 10-12 mm for all samples tested.

## Claims

1. A method of applying a protective covering to a substrate which comprises:
a) applying to the substrate a curable polymeric composition which is liquid at 20°C, is curable to a substantial extent within 24 hours at a temperature of not sore than about 80°C and comprises:
i) a rest component which is liquid at 20°C;
ii) a combination of curing agents, at least one of which is a Bronsted base present in an amount sufficient to render the composition basic when it has been cured;
b) applying one or more polymeric layers, the innermost layer not being a hot melt adhesive and being capable of interacting with the said curable composition, in a manner such that said innermost layer is in intimate contact with said curable composition; and
c) allowing the curable composition to cure while maintaining said innermost layer in intimate contact with said curable composition.

2. A method in accordance with Claim 1, wherein the Bronsted base is present in an amount of 0.01 to about 2 moles in excess of the amount of Bronsted base required to effect cure of the composition.

3. A method according to Claim 1 or 2, wherein the Bronsted base, or at least one of the Bronsted bases, is a tertiary amine.

4. A method in accordance with Claim 2 or 3, wherein said curable polymeric composition comprises a Bisphenol A epoxy resin, a polyamide and a tertiary amine.

5. A method in accordance with Claim 1, wherein said curable polymeric composition further comprises about 0.1 to about 10% by weight, based on the weight of the composition, of a silane.

6. A method in accordance with any of the preceding claims wherein the curable composition contains less than about 5% by weight, based on the weight of the composition, of a solvent.

7. A method in accordance with any of the preceding claims which further comprises the step of heating the substrate to a temperature of not more than about 80°C, preferably not more than about 60°C, prior to applying said curable composition.

8. A method in accordance with any of the preceding claims wherein said curable composition is cured at the temperature of not more than about 80°C, preferably not more than about 60°C.

9. A method in accordance with any of the preceding Claims, wherein step (B) comprises positioning a heat recoverable polymeric article around the substrate and applying heat to cause the article to recover into intimate contact with said curable composition.

## Patentansprüche

1. Verfahren zum Aufbringen einer Schutzüberzugs auf ein Substrat, wobei das Verfahren die folgenden Schritte aufweist:
a) Aufbringen auf das Substrat einer härtbaren polymeren Zusammensetzung, die bei 20 °C flüssig ist, in erheblichem Maß innerhalb von 24 h bei einer Temperatur von nicht mehr als ca. 80 °C härtbar ist und folgendes aufweist:
i) eine Harzkomponente, die bei 20 °C flüssig ist;
ii) eine Kombination von Härtern, von denen mindestens einer eine Brönsted-Base ist, die in einer Menge anwesend ist, die ausreicht, um die Zusammensetzung basisch zu machen, wenn sie gehärtet worden ist;
b) Aufbringen von ein oder mehr polymeren Schichten, wobei die innerste Schicht kein Schmelzklebstoff ist und fähig ist, mit der härtbaren Zusammensetzung auf eine solche Weise zusammenzuwirken, daß die innerste Schicht in innigem Kontakt mit der härtbaren Zusammensetzung ist; und
c) Zulassen, daß die härtbare Zusammensetzung härtet, während gleichzeitig die innerste Schicht in innigem Kontakt mit der härtbaren Zusammensetzung gehalten wird.

2. Verfahren nach Anspruch 1, wobei die Brönsted-Base in einer Menge von 0,01 bis ca. 2 mol über der Menge an Brönsted-Base anwesend ist, die erforderlich ist, um das Härten der Zusammensetzung zu bewirken.

3. Verfahren nach Anspruch 1 oder 2, wobei die Brönsted-Base oder mindestens eine der Brönsted-Basen ein tertiäres Amin ist.

4. Verfahren nach Anspruch 2 oder 3, wobei die härtbare polymere Zusammensetzung ein Bisphenol-A-Epoxidharz, ein Polyamid und ein tertiäres Amin aufweist.

5. Verfahren nach Anspruch 1, wobei die härtbare polymere Zusammensetzung ferner ca. 0,1 bis ca. 10 Gew.-% eines Silans, bezogen auf das Gewicht der Zusammensetzung, aufweist.

6. Verfahren nach einem der vorhergehenden Ansprüche, wobei die härtbare Zusammensetzung weniger als ca. 5 Gew.-% eines Lösungsmittels, bezogen auf das Gewicht der Zusammensetzung, enthält.

7. Verfahren nach einem der vorhergehenden Ansprüche, das ferner den folgenden Schritt aufweist: Erwärmen des Substrats auf eine Temperatur von nicht mehr als ca. 80 °C, bevorzugt nicht mehr als ca. 60 °C, vor dem Aufbringen der härtbaren Zusammensetzung.

8. Verfahren nach einem der vorhergehenden Ansprüche, wobei die härtbare Zusammensetzung bei einer Temperatur von nicht mehr als ca. 80 °C, bevorzugt nicht mehr als ca. 60 °C, gehärtet wird.

9. Verfahren nach einem der vorhergehenden Ansprüche, wobei Schritt (B) folgendes aufweist: Positionieren eines wärmerückstellbaren polymeren Gegenstands um das Substrat herum und Aufbringen von Wärme, um den Gegenstand zu veranlassen, sich in innigen Kontakt mit der härtbaren Zusammensetzung rückzustellen.

## Revendications

1. Procédé d'application d'un revêtement protecteur sur un substrat, qui comprend les étapes dans lesquelles :
a) on applique au substrat une composition polymérique durcissable qui est liquide à 20°C, qui peut durcir à un degré substantiel en 24 heures à une température ne dépassant pas environ 80°C, et comprend :
i) un constituant en résine qui est liquide à 20°C : et
ii) une combinaison d'agents de durcissement dont au moins l'un est une base de Brönsted, présente en quantité suffisante pour rendre la composition basique lorsqu'elle a été durcie ;
b) on applique une ou plusieurs couches polymériques, la couche située le plus à l'intérieur n'étant pas un adhésif thermofusible et étant capable d'interagir avec ladite composition durcissable, d'une manière telle que ladite couche située le plus à l'intérieur soit en contact intime avec ladite composition durcissable ; et
c) on laisse la composition durcissable durcir tout en maintenant ladite couche située le plus à l'intérieur en contact intime avec ladite composition durcissable.

2. Procédé selon la revendication 1, dans lequel la base de Brönsted est présente en quantité de 0,01 à environ 2 moles en excès de la quantité de base de Brönsted nécessaire pour effectuer le durcissement de la composition.

3. Procédé selon la revendication 1 ou 2, dans lequel la base de Brönsted, ou au moins l'une des bases de Brönsted, est une amine tertiaire.

4. Procédé selon la revendication 2 ou 3, dans lequel ladite composition polymérique durcissable comprend une résine époxy bisphénol A, un polyamide et une amine tertiaire.

5. Procédé selon la revendication 1, dans lequel ladite composition polymérique durcissable comprend en outre environ 0,1 à environ 10 % en poids, sur la base du poids de la composition, d'un silane.

6. Procédé selon l'une quelconque des revendications précédentes, dans lequel la composition durcissable contient moins d'environ 5 % en poids, sur la base du poids de la composition, d'un solvant.

7. Procédé selon l'une quelconque des revendications précédentes, qui comprend en outre l'étape de chauffage du substrat à une température ne dépassant pas environ 80°C, ne dépassant pas avantageusement environ 60°C, avant d'appliquer ladite composition durcissable.

8. Procédé selon l'une quelconque des revendications précédentes, dans lequel ladite composition durcissable est durcie à la température ne dépassant pas environ 80°C, ne dépassant pas avantageusement environ 60°C.

9. Procédé selon l'une quelconque des revendications précédentes, dans lequel l'étape (B) comprend le positionnement d'un article polymérique doué de reprise de forme à chaud autour du substrat et l'application de chaleur pour amener, par reprise de forme, l'article en contact intime avec ladite composition durcissable.
